## Europäisches Patentamt

## European Patent Office

## Office européen des brevets

(19)

(11) Veröffentlichungsnummer: **0 165 390**
**B1**

(12) **EUROPÄISCHE PATENTSCHRIFT**

(45) Veröffentlichungstag der Patentschrift:
04.01.89

(21) Anmeldenummer: **85103897.6**

(22) Anmeldetag: **01.04.85**

(51) Int. Cl.⁴: **C 08 L 67/02 //**
**(C08L67/02, 33:14)**

(54) **Gegen Thermooxidation stabile Formmassen auf Basis von hochmolekularem Poly(butylenterephthalat).**

(30) Priorität: **22.05.84 DE 3418966**

(43) Veröffentlichungstag der Anmeldung:
**27.12.85 Patentblatt 85/52**

(45) Bekanntmachung des Hinweises auf die Patenterteilung:
**04.01.89 Patentblatt 89/1**

(84) Benannte Vertragsstaaten:
**CH DE FR GB IT LI NL**

(56) Entgegenhaltungen:
**US-A-3 290 411**
**US-A-4 020 126**
**US-A-4 143 094**

**PATENT ABSTRACTS OF JAPAN, unexamined applications, Sektion C, Band 4, Nr. 22, 23. Februar 1980, THE PATENT OFFICE JAPANESE GOVERNMENT, p. 5 C 74**
**PATENT ABSTRACTS OF JAPAN, unexamined applications, Sektion C, Band 6, Nr. 186, 22. September 1982, THE PATENT OFFICE JAPANESE GOVERNMENT, p. 95 C 126**
**PATENT ABSTRACTS OF JAPAN, unexamined applications, Sektion C, Band 6, Nr. 40, 12. März 1982, THE PATENT OFFICE JAPANESE GOVERNMENT, p. 114 C 94**

(73) Patentinhaber: **HÜLS AKTIENGESELLSCHAFT, - RSP Patente / PB 15 - Postfach 13 20, D-4370 Marl 1 (DE)**

(72) Erfinder: **Dröscher,Michael, Dr., Hetkerbruch 34, D-4270 Dorsten 11 (DE)**

EP 0 165 390 B1

## Beschreibung

Gegenstand der Erfindung sind gegen Thermooxidation stabile Formmassen auf Basis von hochmolekularem Poly(butylenterephthalat).

Formmassen auf Basis von hochmolekularem Poly(butylenterephthalat) sowie hieraus gefertigte Formteile oder Folien haben eine Dauertemperaturbeständigkeit von etwa 105 bis 115°C. Bei höheren Temperaturen bewirkt der Luftsauerstoff eine Veränderung der chemischen und der physikalischen Struktur, die zu einer raschen Minderung der Gebrauchseigenschaften führt. Neben einer Verfärbung erfolgt ein Abfall der mechanischen Eigenschaften, insbesondere der Zähigkeit. Solche thermooxidativ geschädigten Formmassen sind für den praktischen Gebrauch aufgrund ihrer unzureichenden Eigenschaften ungeeignet.

Es ist bekannt, Polymere, die über einen längeren Zeitraum bei erhöhten Temperaturen der Einwirkung von Luft ausgesetzt sind, durch Zusatz geeigneter Additive wie z. B. Bisphenol A-Epichlorhydrin-Epoxiharze zu stabilisieren. Dadurch wird der thermooxidative Angriff verlangsamt und eine rasche Schädigung des polymeren Materials verhindert.

Es ist aus der JP-A-54-158 453 bekannt, aromatische Polyester gegen die negativen Auswirkungen eines hydrolytischen Abbaus, insbesondere die Haarrißbildung, durch Zusatz eines Copolymeren zu schützen, das eine Glastemperatur von 5 bis 60°C aufweist und wenigstens 30 % (Meth)Acrylsäurealkylester, 3 bis 40 % Glycidyl(meth)acrylat und 5 bis 50 % (Meth)Acrylnitril oder Styrol enthält.

Aufgabe der Erfindung war es, die Dauertemperaturbeständigkeit von Poly(butylenterephthalat) als solchem zu verbessern.

Diese Aufgabe wurde durch Formmassen gelöst, die aus einer Mischung von

A.     Poly(butylenterephthalat) mit einer Viskositätszahl J von mindestens 80 cm³/g und
B.     0,5 bis weniger als 5 Gew.-Teile - bezogen auf 100 Gew.-Teile der Formmasse - eines Methylmethacrylat-Copolymeren, das 2 bis 10 Mol-% eines Vinylgruppenhaltigen Comonomeren mit einer Carboxyl- oder Epoxigruppe enthält,

bestehen.

Methylmethacrylat-Copolymere sowie ihre Herstellung sind bekannt (J. P. Brusie, "Acrylic Ester Polymers" in "Encyclopedia of Polymer Science and Technologie", Vol. 1, Seite 197 ff, New York, Interscience Publishers, 1964).

Für die erfindungsgemäß eingesetzten Copolymeren (Komponente B.) geeignete Comonomere sind z. B. Acrylsäure, Methacrylsäure, Maleinsäure und Methacrylsäureglycidylester. Bevorzugt sind Methacrylsäure, Maleinsäure-(anhydrid) und Methacrylsäureglycidylester. Die Comonomeren sind in Mengen von 2 bis 10 Mol-%, bevorzugt 3 bis 7 Mol-%, in den Copolymeren enthalten. Die erfindungsgemäßen Copolymeren können anstelle von Methylmethacrylat bis zu 20 Mol-% - bezogen auf die Zahl der Monomerbausteine weitere Comonomere, wie Alkylmethacrylate, Alkylacrylate oder Styrol enthalten, wobei die Alkylgruppen 1 bis 10 C-Atome aufweisen.

Das durch Lichtstreuungsuntersuchungen gemessene mittlere Molekulargewicht der Copolymeren liegt zwischen 80 000 und 500 000, bevorzugt zwischen 120 000 und 250 000.

Die Komponente B. wird in Mengen von 0,5 bis 5 Gew.-Teilen, vorzugsweise 0,75 bis 2,5 Gew.-Teilen - bezogen auf 100 Gew.-Teile der Formmasse - eingesetzt.

Bis zu 20 Mol-%, vorzugsweise 5 bis 15 Mol-%, der Terephthalsäure im Poly(butylenterephthalat) können durch aromatische, cycloaliphatische oder aliphatische Dicarbonsäuren ersetzt werden. Beispiele geeigneter Dicarbonsäuren sind Isophthalsäure, Phthalsäure, Cyclohexan-1.4-dicarbonsäure, Adipinsäure, Sebazinsäure, Azelainsäure, Decandicarbonsäure o. ä.

Bis zu 20 Mol-%, vorzugsweise 5 bis 15 Mol-%, des Butandiol-(1.4) können durch aliphatische oder cycloaliphatische Diole, wie beispielsweise Ethylenglykol, Propandiol-(1.3), Hexandiol-(1.6), Neopentylglykol, 1,4-Dimethylolcyclohexan, Dodecandiol-(1.12) o. ä. ersetzt sein.

Das erfindungsgemäß verwendete Poly(butylenterephthalat) wird in üblicher Weise durch Um- oder Veresterung und anschließende Polykondensation von Terephthalsäure oder deren polyesterbildenden Derivaten mit Butandiol-(1.4) in Gegenwart von Katalysatoren hergestellt (Sorensen und Campbell, Preparative Methods of Polymer Chemistry, N.Y., Interscience Publishers Inc., 1961, Seiten 111 bis 127; Kunststoff-Handbuch, Band VIII, München, C. Hanser Verlag, 1973, bzw. Journal of Polymer Science, Part A 1, 4, Seiten 1851 bis 1859, 1966).

Für die Herstellung der Formmasse geeignetes Poly(butylenterephthalat) (Komponente A.) weist eine Viskositätszahl J von mindestens 80 cm³/g auf.

Die erfindungsgemäßen Formmassen werden durch Mischen der Komponente A. und Komponente B. erhalten. In einer bevorzugten Ausführungsform werden die so erhaltenen Formmassen in der Schmelze bei 240 bis 300°C, vorzugsweise bei 250 bis 270°C, thermisch behandelt. Diese Maßnahme wird üblicherweise in einem (dis)kontinuierlich betriebenen Kneter durchgeführt. Im allgemeinen beträgt die Behandlungszeit bei kontinuierlicher Arbeitsweise 1 bis 5 min und bei diskontinuierlicher Arbeitsweise 2 bis 20 min.

In einer anderen bevorzugten Ausführungsform wird die Komponente B. bereits während der Herstellung des Poly(butylenterephthalats) zugegeben. Die Zugabe kann während der Um- bzw Veresterungsphase oder der Polykondensation erfolgen.

In die erfindungsgemäßen Formmassen können andere in der Polyestertechnologie übliche Polymere, wie z. B. Polyethylenterephthalat, Polyamide (Faserforsch. Textiltechn. 27 (2), 81 - 86 (1976)), Polyetheresteramide (DE-A-2 930 343), Polyetherester (US-A-4 317 764) eingearbeitet werden. Diese angeführten Mischungsbestandteile sind zu 1 bis 40, vorzugsweise 5 bis 25 Gew.-Teilen, in den so erhaltenen Mischungen enthalten.

Übliche Zusatz- und Hilfsstoffe, wie Pigmente, Verarbeitungsmittel, Füll- und Verstärkungsstoffe, Hydrolyse- oder UV-Stabilisatoren, können sowohl während der Herstellung als auch in die fertigen Formmassen eingearbeitet werden.

Sofern erforderlich, kann die erfindungsgemäße Formmasse auch einer Festphasennachkondensation unterworfen werden (GB-A-1 066 162, US-A-3 405 098). Dies geschieht in der Weise, daß die Formmasse in Granulat- oder Pulverform auf Temperaturen gebracht wird, die etwa 10 bis 60°C unterhalb des Schmelzpunktes der Formmasse liegen.

Es war nicht vorherzusehen, daß Methylmethacrylat-Copolymere, die freie Carboxyl- oder Epoxigruppen tragen, eine ausgezeichnete Stabilisierung von Poly(butylenterephthalat) gegen Wärmeabbau bewirken und gleichzeitig eine Verfärbung des Poly(butylenterephthalats) bei der Wärmebehandlung in Luft verhindern.

Die Alterungsversuche wurden an Zylindergranulatkörnern von 2 bis 3 mm Länge und 1 bis 2 mm Durchmesser in einem Umlufttrockenschrank bei 150°C durchgeführt.

Die Viskositätszahl (J) wurde nach DIN 16 779, Teil 2, an Lösungen von 0,5 g Poly(butylenterephthalat) in 100 ml Phenol/o-Dichlorbenzol (50/50 Gew.-Teile) bei 25°C bestimmt.

Zur Bestimmung der COOH-Zahl wird 1 g Formmasse bei 180°C in 50 ml Benzylalkohol unter Stickstoffatmosphäre gelöst und bei 180°C mit 0,1 N methanolischer KOH gegen Phenolphthalein titriert bis die Rotfärbung der Lösung etwa 10 Sekunden andauert. Dabei ist die COOH-Zahl durch die folgende Gleichung gegeben:

$$[COOH] \text{ in } \frac{mVal}{kg} = \frac{(Verbrauch \text{ in } ml - Blindwert \text{ in } ml) \times Faktor \text{ } KOH}{Einwaage \text{ in } g} \cdot 100$$

Die Farbe wurde visuell bestimmt.

Mit Buchstaben gekennzeichnete Versuche sind nicht erfindungsgemäß.

## Beispiele

## Herstellung der erfindungsgemäßen Formmassen

### I. Versuche 1 bis 4

In einem 100 l-Kessel werden 38,8 kg (200 Mol) Dimethylterephthalat und 27 kg (300 Mol) Butandiol-(1.4), 881 g der in der Tabelle angegebenen Komponente B. und 15 g Titantetraisopropylat als Katalysator vorgelegt. Es wird in einem schwachen Stickstoffstrom zunächst 3 h bei 160°C, dann 2 h bei 200°C bis zur Abdestillation der theoretisch zu erwartenden Methanolmenge unter Rühren ungeestert.

Darauf wird im Verlauf von 2 h Wasserstrahlvakuum angelegt, in weiteren 1,5 h wird dann das Reaktionsgemisch unter Rühren auf 250°C aufgeheizt. Diese Bedingungen werden 30 min gehalten, anschließend wird ein Vakuum von < 1 mbar angelegt und das Reaktionsgemisch bis zu einer Viskositätszahl (J) von 95 bis 190 cm³/g polykondensiert. Nach Auflieben des Vakuums mit N₂ wird die Schmelze in Strangform ausgetragen, in Wasser gekühlt, granuliert und getrocknet. Es werden 45 kg Granulat erhalten.

### II. Versuche 5 und 6

1 Gew.-% (Versuch 5) bzw 2 Gew.-% (Versuch 6) der in der Tabelle angegebenen Komponente B. werden mit Poly(butylenterephthalat) (J = 110 cm³/g) in einem kontinuierlichen Zweischneckenkneter bei 250°C, Verweilzeit 2 min, gemischt. Die Aufarbeitung erfolgt gemäß I.

### III. Versuch A

Der Polyester wird gemäß I. hergestellt - jedoch ohne Zusatz einer erfindungsgemäßen Komponente B.

### IV. Versuch B

2 Gew.-% eines handelsüblichen Kondensationsproduktes aus Epichlorhydrin und Bisphenol A - EPIKOTE® 1004 werden mit Poly(butylenterephthalat) (J = 110 cm³/g) in einem kontinuierlichen Zweischneckenkneter bei 250°C, Verweilzeit 2 min, gemischt. Die Aufarbeitung der Schmelze erfolgt gemäß I.

# EP 0 165 390 B1

**Tabelle**

| Ver-such | Zusammensetzung der Komponente B. [Mol-%] | J [cm³/g] nach einer Alterungszeit (in Luft/150°C) von | | | | [COOH] [mVal/kg] nach | | Farbe nach | |
|---|---|---|---|---|---|---|---|---|---|
| | | 0 | 1 | 7 | 28 | 0 | 28 | 0 | 28 |
| | | | Tagen | | | Tagen | | Tagen | |
| 1 | 95 MMA*)/5 Methacrylsäure | 98 | 100 | 101 | 102 | 28 | 70 | weiß | weiß |
| 2 | 97 MMA*)/3 Methacrylsäure | 105 | 106 | 106 | 108 | 25 | 58 | weiß | weiß |
| 3 | 95 MMA*)/5 Glycidylmethacrylat | 103 | 104 | 105 | 106 | 30 | 66 | weiß | weiß |
| 4 | 90 MMA*)/5 Styrol/5 Malein-säureanhydrid | 101 | 100 | 100 | 105 | 28 | 62 | weiß | weiß |
| 5 | 95 MMA*)/5 Glycidylmethacrylat | 107 | 106 | 105 | 106 | 33 | 50 | weiß | weiß |
| 6 | 95 MMA*)/5 Glycidylmethacrylat | 108 | 108 | 107 | 107 | 39 | 55 | weiß | weiß |
| A | - | 106 | 105 | 102 | 99 | 22 | 80 | weiß | gelblich |
| B | handelsübliches Kondensations-produkt aus Epichlorhydrin und Bisphenol A (EPIKOTE® 1004) | 106 | 106 | 112 | 122 | 23 | 52 | weiß | braun |

*) Methylmethacrylat

## Patentansprüche

1. Gegen Thermooxidation stabile Formmasse auf Basis von hochmolekularem Poly(butylenterephthalat) bestehend aus einer Mischung von

A.    Poly(butylenterephthalat) mit einer Viskositätszahl J von mindestens 80 cm³/g und

B.    0,5 bis weniger als 5 Gew.-Teile - bezogen auf 100 Gew.-Teile der Formmasse - eines Methylmethacrylat-Copolymeren, das 2 bis 10 Mol-% eines vinylgruppenhaltigen Comonomeren mit mindestens einer Carboxyl- oder Epoxigruppe enthält.

2. Formmasse gemäß Anspruch 1, welche die Komponente B. in einer Menge von 0,75 bis 1,5 Gew.-Teile - bezogen auf 100 Gew. -Teile der Formmasse - enthält.

3. Formmasse gemäß den Ansprüchen 1 und 2, in der als Komponente B. Methylmethacrylat-Copolymere eingesetzt werden, die das Comonomere in einer Menge von 3 bis 7 Mol-% enthalten.

4. Formmasse gemäß den Ansprüchen 1 bis 3, in der als Komponente B. Methylmethacrylat-Copolymere eingesetzt werden, die als Comonomere Methacrylsäure, Maleinsäureanhydrid oder Glycidylmethacrylate enthalten.

5. Formmasse gemäß den Ansprüchen 1 bis 4 erhalten durch Mischen der Komponenten A. und B. in der Schmelze bei 240 bis 300°C.

6. Formmasse gemäß den Ansprüchen 1 bis 4 erhalten durch Zugabe der Komponente B. während der Herstellung des Poly(butylenterephthalats).

## Claims

1. A moulding composition, stable to thermo-oxidation and based on high molecular poly(butylene terephthalate), composed of a mixture of

A.    poly(butylene terephthalate) having a viscosity index J of at least 80 cm³/g and

B.    from 0.5 to less than 5 parts by weight, based on 100 parts by weight of the moulding composition, of a methyl methacrylate copolymer which contains from 2 to 10 mole % of a comonomer containing a vinyl group and possessing at least one carboxyl or epoxy group.

2. A moulding composition according to claim 1, which contains component B in an amount of from 0.75 to 1.5 parts by weight, based on 100 parts by weight of the moulding composition.

3. A moulding compostion according to claim 1 and 2, in which a methyl methacrylate copolymer which contains the comonomer in an amount of from 3 to 7 mole % is employed as component B.

4. A moulding composition according to any of claims 1 to 3, in which a methyl methacrylate copolymer which contains methacrylic acid, maleic anhydride or glycidyl methacrylated as comonomer is employed as component B.

EP 0 165 390 B1

5. A moulding composition according to any of claims 1 to 4, which is obtained by mixing components A and B as a melt at 240 to 300°C.

6. A moulding composition according to any of claims 1 to 4, which is obtained by adding component B during preparation of the poly(butylene terephthalate).

## Revendications

1. Masse à mouler stable à la thermo-oxydation, à base de poly(butylène-téréphtalate) de poids moléculaire élevé, composée d'un mélange

A.   de poly(butylène-téréphtalate) possédant un indice de viscosité J d'au moins 80 cm$^3$/g et

B.   de 0,5 à moins de 5 parties en poids - relativement à 100 parties en poids de la masse à mouler - d'un copolymère de méthacrylate de méthyle, qui contient de 2 à 10 mol-% d'un comonomère comportant des groupes vinyle et renfermant au moins un groupe carboxyle ou époxy.

2. Masse à mouler selon la revendication 1, qui contient le composant B. dans une quantité de 0,75 à 1,5 partie en poids relativement à 100 parties en poids de la masse à mouler.

3. Masse à mouler selon les revendications 1 et 2, dans laquelle on utilise, comme composant B., des copolymères de méthacrylate de méthyle, qui contiennent le comonomère dans une quantité de 3 à 7 mol-%.

4. Masse à mouler selon les revendications 1 à 3, dans laquelle on utilise, comme composants B., des copolymères de méthacrylate de méthyle qui renferment, comme comonomères de l'acide méthacrylique, de l'anhydride d'acide maléique ou des méthacrylates de glycidyle.

5. Masse à mouler selon les revendications 1 à 4, obtenue par mélange des composants A. et B. à l'état fondu, à une température de 240 à 300°C.

6. Masse à mouler selon les revendications 1 à 4, obtenue par addition du composant B. pendant la préparation du poly(butylène-téréphtalate).

5